**Europäisches Patentamt**

**European Patent Office**

**Office européen des brevets**

(19)

(11) Numéro de publication: **0 055 971**
**A1**

## (12) DEMANDE DE BREVET EUROPEEN

(21) Numéro de dépôt: **81630084.2**

(22) Date de dépôt: **29.12.81**

(51) Int. Cl.³: **G 01 B 15/04**

(30) Priorité: **07.01.81 LU 83049**

(43) Date de publication de la demande:
**14.07.82 Bulletin 82/28**

(84) Etats contractants désignés:
**AT BE CH DE FR GB IT LI NL SE**

(71) Demandeur: **ARBED S.A.**
**Avenue de la Liberté 19**
**L-2930 Luxembourg(LU)**

(72) Inventeur: **Liesch, Jean**
**117 rue de Luxembourg**
**L-4221 Esch/Alzette(LU)**

(72) Inventeur: **Reiff, Nico**
**435 route de Longwy**
**L-1941 Luxembourg(LU)**

(72) Inventeur: **Junck, Guy**
**41 rue Batty Weber**
**L-4346 Esch/Alzette(LU)**

(74) Mandataire: **Neyen, René**
**Administration Centrale de l'Arbed Case postale 1802**
**L-2930 Luxembourg(LU)**

(54) **Installation de contrôle de la géométrie de produits laminés.**

(57) Une installation de contrôle en continu de la géométrie de produits laminés comprend notamment une unité de mesure (1), une unité d'évaluation (2) et une unité de communication (3) entre le processus de mesure et l'opérateur. Les trois unités sont reliées entre elles. Une source (1, 0) de rayons à pouvoir de pénétration prononcé forme l'extrémité d'un support extensible (1,1); plusieurs capteurs (1,2; 1,3; 1,4) sont fixés par l'intermédiaire de supports extensibles à un anneau (1,5) qui peut tourner autour de son axe et les supports peuvent effectuer un mouvement de rotation en plus de la translation. La source et les capteurs sont disposés dans un plan essentiellement perpendiculaire à l'axe d'un profilé en voie de laminage et autour de celui-ci.

Chaque support comporte une commande à distance individuelle qui règle sa position, soit par un mouvement combiné de translation et de rotation, soit par un mouvement uniquement de translation resp. de rotation.

L'anneau (1,5) comporte une commande à distance qui règle sa position par un mouvement de rotation.

FIG. 1

./...

C 18

X

T 19
L 110

2

21    22

3

23

FIG. 2

0055971

Installation de contrôle de la géométrie de produits laminés.

La présente invention concerne une installation pour le contrôle en continu de la géométrie de produits laminés.

Les trains de laminoir conçus pour le laminage de produits en grandes quantités et qui peuvent présenter des profils complexes, comme p.ex. les trains pour laminage de poutrelles ou de palplanches, comportent des stations de contrôle servant à déterminer si la géométrie du produit laminé est conforme aux normes. Dans la négative on décide s'il est possible de recourir à des mesures correctives ou s'il faut rebuter définitivement le produit non-conforme. Au cas où une correction a des chances de mener à l'acceptation ultérieure du produit, on détermine le genre de correction à effectuer, on marque le produit en conséquence et on le dirige vers la station appropriée où la mesure corrective est effectuée.

Pour assurer que la production courante se déroule d'une manière rationnelle, il est nécessaire de disposer rapidement des résultats de mesure d'un côté pour connaître à tout moment la quantité de profilés correspondant aux normes afin d'éviter une sur-production ou une sous-production et d'un autre côté pour être en mesure de réagir rapidement dans le cas de l'apparition d'une imperfection systématique.

Le but de la présente invention était de proposer un dispositif permettant de contrôler rapidement et au cours du laminage la géométrie de profilés même complexes, de sorte à être en mesure d'intervenir avec efficacité dans le processus de fabrication.

Ce but est atteint par le dispositif suivant l'invention qui comprend notamment une unité de mesure, une unité d'évaluation et une unité de communication entre le processus de mesure et l'opérateur les trois unités étant reliées entre elles et qui est caractérisé en ce qu'une source de rayons à pouvoir de pénétration prononcé (1) forme l'extrémité d'un support extensible (1,1), que plusieurs capteurs (1,2;1,3;1,4) sont fixés par l'intermédiaire de supports extensibles à un anneau (1,5) qui peut tourner autour de son axe, les supports pouvant effectuer un mouvement de rotation, en plus de la translation et que la source et les capteurs sont disposés dans un plan essentiellement perpendiculaire à l'axe d'un profilé en voie de laminage et autour de celui-ci.

Suivant l'invention chaque support comporte une commande à distance individuelle qui règle sa position, soit par un mouvement combiné de translation et de rotation, soit par un mouvement uniquement de translation resp. de rotation. Il est évident qu'une commande analogue est prévue pour placer l'anneau (1,5) en position désirée.

Ainsi il est possible de réaliser pratiquement toute position d'au-moins un capteur vis-à-vis de la source et vis-à-vis du profil, si bien que l'on arrive à effectuer des mesures significatives aux endroits critiques.

La source de rayonnement pénétrant peut être p.ex. une source radio-active ou une source de rayons X. Dans les deux cas des mesures de protection s'imposent de toute évidence.

Les résultats des mesures fournissent des informations relatives soit à la section du produit (épaisseurs, hauteurs, largeurs, section, symétrie), soit au degré de régularité linéaire en suivant une trace prédéterminée.

Les informations recueillies par les capteurs de mesure sont reconstituées dans une électronique d'évaluation et exploitées en contrôle de section, de dimensions ou de défauts du produit. De même il devient possible de calculer le poids métrique resp. le poids total du produit laminé. Ces grandeurs mesurées et calculées sont comparées à celles d'un produit de référence et toute variation par rapport à celui-ci est signalée à l'opérateur et/ou introduite dans le circuit de régulation dynamique du train de laminoir.

- 3 -

0055971

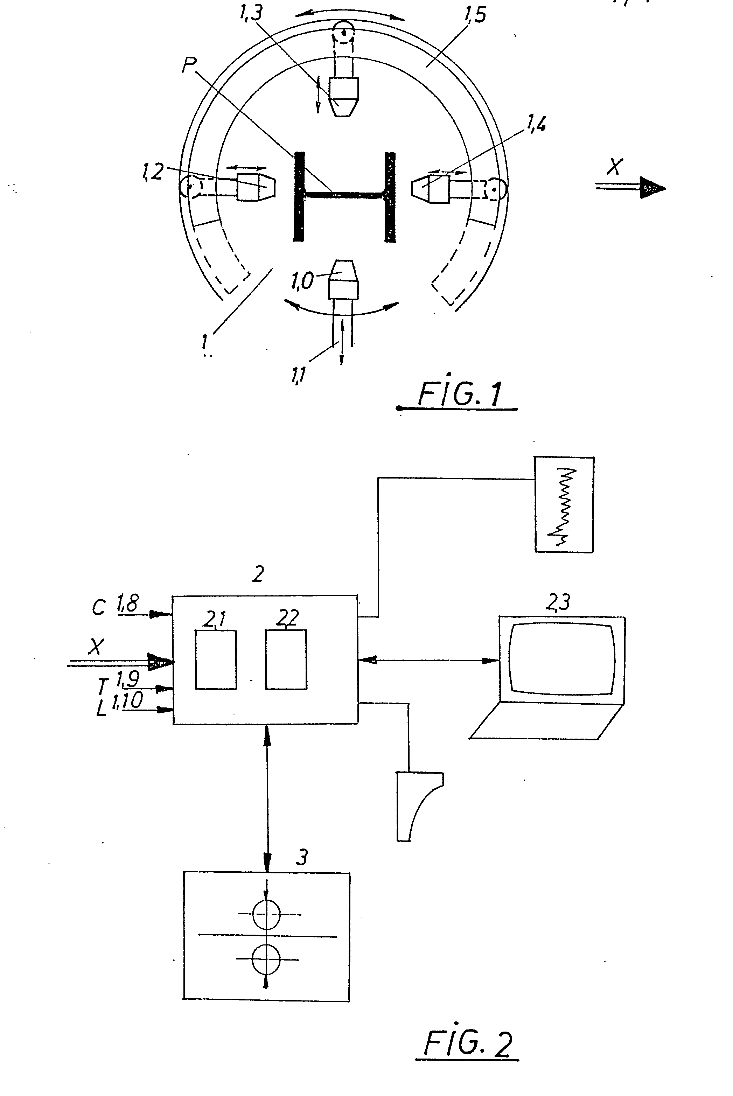

Comme il ressort du dessin qui montre de manière non-limitative le schéma d'une forme d'exécution possible du dispositif selon l'invention, ce dernier est constitué des trois groupes fonctionnels suivants:

La tête de mesure (1) du produit à analyser; l'électronique d'évaluation (2) basée sur micro-processeur et l'unité (3) de communication avec le processus et l'opérateur.

En détail la tête de mesure comprend une source (1,0) radioactive ou à rayons X à mouvement de rotation ou de translation (1,1), trois détecteurs ou capteurs (1,2; 1,3; 1,4) tenus par un support rotatif, chaque détecteur pouvant subir un mouvement de translation supplémentaire. Source (1,0) et détecteurs (1,2; 1,3; 1,4) sont utilement solidaires d'un bâti non représenté et peuvent être synchronisés dans leurs mouvements respectifs, afin de permettre le mode de scrutation de section (produit P à l'arrêt) ou le mode de scrutation linéaire et combiné (produit P en mouvement). Un blindage doit être prévu pour fournir une protection adéquate.

Les signaux de mesure (X) sont transmis à l'unité d'évaluation (2). Celle-ci peut recevoir en plus les signaux suivants: cadence du train (1,8), température du produit (1,9), longueur du produit (1,10).

Après épuration (2,1) ces signaux sont traités par le micro-système (2,2) équipé des moyens de dialogue et d'édition (2,3) usuels.

Le microsystème (2,2) calcule donc les dimensions, la section, l'envergure des défauts, la symétrie, le poids métrique et le poids total du produit inspecté. Tout écart par rapport à la référence est signalé à l'opérateur, enregistré et le cas échéant introduit dans la boucle de régulation dynamique (3) du train.

Revendications

1. Installation de contrôle en continu de la géométrie de produits laminés, qui comprend notamment une unité de mesure (1), une unité d'évaluation (2) et une unité de communication (3) entre le processus de mesure et l'opérateur, les trois unités étant reliées entre elles et qui est caractérisé en ce qu'une source (1,0) de rayons à pouvoir de pénétration prononcé forme l'extrémité d'un support extensible (1,1), que plusieurs capteurs (1,2; 1,3; 1,4) sont fixés par l'intermédiaire de supports extensibles à un anneau (1,5) qui peut tourner autour de son axe, les supports pouvant effectuer un mouvement de rotation en plus de la translation, et que la source et les capteurs sont disposés dans un plan essentiellement perpendiculaire à l'axe d'un profilé en voie de laminage et autour de celui-ci.

2. Installation suivant la revendication 1, caractérisée en ce que chaque support comporte une commande à distance individuelle, qui règle sa position, soit par un mouvement combiné de translation et de rotation, soit par un mouvement uniquement de translation resp. de rotation.

3. Installation suivant les revendication 1 et 2, caractérisée en ce que l'anneau (1,5) comporte une commande à distance qui règle sa position par un mouvement de rotation.

1,3

1,5

P

1,2

1,4

X

1,0

1

1,1

## FIG. 1

2

C 1,8

2,1

2,2

X

T 1,9

L 1,10

2,3

3

## FIG. 2

**0055971**

**RAPPORT DE RECHERCHE EUROPEENNE**

Numéro de la demande

EP 81 63 0084.2

| Catégorie | Citation du document avec indication, en cas de besoin, des parties pertinentes | Revendication concernée |
|---|---|---|
| Y | US – A – 4 031 752 (A. SANDERS)<br>* colonne 2, lignes 16 à 44 * | 1-3 |
| Y | LU – A – 79 736 (ARBED S.A.)<br>* page 3, paragraphes 2, 3; page 4, paragraphe 5 * | 1-3 |
| A | FR – A1 – 2 325 020 (HEATH (GLOUCESTER) LTD.)<br>* page 1, ligne 30 à page 2, ligne 6 * | 1 |
| A | US – A – 3 822 383 (T. BECKAGE et al.)<br>* colonne 1, lignes 27 à 53 *<br>& FR – A – 2 225 718 | 1 |

**DOCUMENTS CONSIDERES COMME PERTINENTS**

**CLASSEMENT DE LA DEMANDE (Int. Cl. 3)**

G 01 B 15/04

**DOMAINES TECHNIQUES RECHERCHES (Int. Cl. 3)**

G 01 B 15/00
G 01 N 23/00
G 05 D 5/00

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| Berlin | 19-03-1982 | BOTTERILL |

OEB Form 1503.1  06.78